# EUROPEAN PATENT SPECIFICATION

(11) **EP 3 982 450 B1**
(45) Date of publication and mention of the grant of the patent: **29.10.2025**
(21) Application number: 20822660.5
(22) Date of filing: 12.05.2020
(51) Int. Cl.: H01M 10/04, H01M 10/0585, H01M 10/48, G01N 23/04, G01N 23/10

(54) **BATTERY INSPECTION DEVICE AND BATTERY INSPECTION METHOD**
BATTERIEPRÜFVORRICHTUNG UND BATTERIEPRÜFVERFAHREN
DISPOSITIF D'INSPECTION DE BATTERIE ET PROCÉDÉ D'INSPECTION DE BATTERIE

(30) Priority: 10.06.2019 JP 2019107730
(43) Date of publication of application: 13.04.2022
(73) Proprietor: Toray Industries, Inc., Tokyo 103-8666 (JP)
(72) Inventor: MURAI, Takahiro, Otsu-shi, Shiga 520-8558 (JP)
(74) Representative: Kador & Partner Part mbB
(86) International application number: PCT/JP2020/018924
(87) International publication number: WO 2020/250609

(56) References cited:
- JP-A- 2005 228 533
- JP-A- 2011 039 014
- JP-A- 2016 109 654
- JP-A- 2018 087 740
- JP-A- 2020 085 690
- US-A1- 2002 166 802
- US-A1- 2011 096 900

## Description

### TECHNICAL FIELD

The present invention relates to an inspection device and inspection method for inspecting the inside of a battery using X-rays, and particularly to a battery inspection device and battery inspection method that are suitable for inspecting a stacked battery composed of cathodes and anodes alternately layered in a battery case.

### BACKGROUND ART

In recent years, there has been an increasing demand for secondary batteries such as lithium-ion batteries in the context of the development of devices such as mobile phones and the practical application of electric vehicles. The cathode plate and anode plate of a lithium-ion battery are plate-like. A material used as the anode plate is a carbonaceous material or the like that can occlude and release lithium, and a material used as the cathode plate is a composite oxide of a transition metal and lithium, such as LiCoO₂. The electrodes are housed together with an electrolyte solution in a case, forming a layered structure (hereinafter referred to as a "stacked" structure) in which the electrodes are piled up in layers with a separator between the cathode and anode.

This lithium-ion battery has a possibility that the position of the cathode plate shifts, causing the side edge of the cathode plate to protrude more outside than the side edge of the anode plate, and then, use of such a battery causes the metal lithium to precipitate on the protruding portion of the cathode plate and may cause a short-circuited electrodes and may lead an ignition of the battery. Accordingly, it is important for safety to always maintain the positional relationship such that the side edge of the cathode plate is located more inside than the side edge of the anode plate. From this viewpoint, in case the position of the electrode should shift in processes of producing batteries, enclosing electrodes in a case is followed by performing an X-ray fluoroscopy inspection to check the electrode for any positional shift.

For example, Patent Literature 1 and Patent Literature 2 disclose an inspection method of measuring a shift in the position of the electrode using X-rays, in which inspection method, a corner of a battery is irradiated with X-rays in parallel with the electrode. However, using X-rays, which are radially radiated from one point as the source of the rays, involves locating the battery so that the electrodes can each be parallel with the radial axis of the X-rays. Because of this, such an inspection takes a very long time in some cases. In addition, a battery production process can cause a defect. For example, when an electrode is received in a case, the tip portion of the electrode can come in contact with the case, thus causing the tip of the electrode to be significantly bent. In this case, the position (coordinates) of the tip portion is measured with the tip portion off an assumed observation region, resulting in detecting the coordinates of the tip of the electrode at this position off the observation region.
Patent Literature 3 discloses a battery inspection system. The battery inspection system includes a battery feeding conveyor for feeding batteries to be inspected. One or more transfer robots are positioned near the rear end of the battery feeding conveyor for transferring batteries fed through the battery feeding conveyor to inspection and discharge positions. An X-ray generator is positioned under the transfer robots for applying X-rays to batteries transferred by the transfer robots. A battery discharging conveyor is positioned near the transfer robots for discharging battery moved by the transfer robots and having been inspected. A defective battery discharging robot is positioned near the front end of the satisfactory battery discharging conveyor for removing defective batteries from batteries moving along the satisfactory battery discharging conveyor and having been inspected. Patent Literature 4 discloses a battery X-ray inspection device capable of inspecting the positional deviation of an electrode plate. The battery X-ray inspection device comprises: an electrode contour extraction part 21 for extracting respective contours showing positions of positive and negative electrode plates in an X-ray transmission image; a baseline setting part 22 for setting a baseline B in a direction traversing each contour at positions having the extracted contours separated to sandwich a separator; a first search area setting part 23 for setting a narrow first search area to each contour using a position between the contours adjacent on the baseline B as a starting point and using a linear division line extending along the longitudinal direction of the contour as a boundary; and a first tip extraction part 26 for extracting the tip of the contour continuous from the baseline in the first search area set to a contour to be inspected. The reference signs refer to Figure 1 of Patent Literature 4.

### Citation List

### Patent Literature

Patent Literature 1: JP2016-109654A
Patent Literature 2: JP2012-164620A
Patent Literature 3: US2002166802
Patent Literature 4: JP2018087740

### SUMMARY OF INVENTION

### Technical Problem

In view of the above-mentioned problems, an object of the present invention is to provide a battery inspection device and battery inspection method that make it possible to inspect the positional shift of the electrode accurately in a short time.

### Solution to Problem

A battery inspection device according to the present invention for solving the above-mentioned problems is a battery inspection device that includes at least:
an X-ray source;
a light-receiver capable of receiving X-rays from the X-ray source substantially continuously;
a displacement means configured to displace the relative positions of a battery and the X-ray source in a direction vertical to a direction in which the plate-like electrode extends, wherein the battery contains a plurality of plate-like electrodes housed generally in parallel in the battery; and
a determination means configured to acquire image information from the light-receiver and positional information of the displacement means, and compute on the basis of the image information and the positional information to determine whether the battery is acceptable;
wherein the computation on the basis of the image information and the positional information includes the steps of: selecting the image having the smallest projection width from among images taken of each of the plate-like electrodes; and computing the spatial position of said electrode and the relative positional shift between the end of the electrode as a cathode and the end of the electrode as an anode in data on the image selected,
wherein said X-ray source is disposed so as to be able to radiate said X-rays to a corner of the plate-like electrode in a direction in which said X-rays are transmitted through two sides constituting said corner.

A battery inspection device is disclosed that is a battery inspection device configured to inspect the positional shift of each of a plurality of plate-like electrodes housed generally in parallel in a battery, the battery inspection device including: an X-ray source; a light-receiver configured to receive X-rays from the X-ray source; a displacement means configured to displace the relative positions of the battery and the X-ray source in a direction vertical to a direction in which the electrode extends; and a determination means configured to acquire image information from the light-receiver and positional information of the displacement means, and compute the position of the electrode on the basis of the image information and the positional information to determine whether the battery is acceptable; wherein the computation on the basis of the image information and the positional information includes: selecting the image having the smallest projection width from among images taken of each of the plate-like electrodes; and detecting the positional shift of the electrode in data on the image selected.

In addition, a battery inspection method according to the present invention for solving the above-mentioned problems is a battery inspection method of inspecting the positions of a plurality of plate-like electrodes housed generally in parallel in a battery, the battery inspection method including the steps of:
1) using an X-ray source disposed so as to be able to radiate X-rays in a direction in which the plate-like electrode extends, a light-receiver configured to receive the X-rays from the X-ray source, and means capable of displacing the relative positions of the X-ray source and the electrode in a direction vertical to the direction in which the plate-like electrode extends, to displace the relative positions of the X-ray source and the electrode in the direction vertical to the direction in which the plate-like electrode extends, and at the same time, substantially continuously take images of all of the plurality of electrodes housed in the battery;
2) selecting the image having the smallest projection width from among the images substantially continuously taken of each of the electrodes;
3) computing the position of each of the electrodes in the battery on the basis of data in the image selected, and;
4) using the computation results as a base to determine whether the battery is acceptable,
wherein the radiation and image-taking of said X-rays are performed in such a manner that said X-rays are radiated to a corner of said plate-like electrode in a direction in which said X-rays are transmitted through two sides constituting said corner, and the step 2) and the step 3) are performed on each corner, and the step 4) comprises: determining whether said battery is acceptable, by determining the spatial position of said electrode and the relative positional shift between the end of the electrode as a cathode and the end of the electrode as an anode from said images selected.

In addition, various improved aspects are proposed.

### Advantageous Effects of Invention

The present invention makes it possible to inspect the positional shift of the electrode in a short time.

### BRIEF DESCRIPTION OF DRAWINGS

FIG. 1 is a schematic view depicting the constitution of a battery inspection device according to an embodiment of the present invention.
FIG. 1a is a schematic view depicting an example of a form of measurement made in an X-ray radiator 1 (a).
FIG. 1b is a schematic view depicting an example of the radiation directions of X-rays to a corner of a battery in X-ray radiators 1 (a) to 1 (h).
FIG. 2 is a conceptual diagram of the basic constitution of a stacked lithium-ion battery.
FIG. 3 is a schematic view depicting the relationship between the position of an electrode in the irradiation region and the brightness peak.
FIG. 4 is a flow chart illustrating an example of a process of determining whether a battery is an acceptable product or an unacceptable product.
FIG. 5 is a schematic diagram of a brightness profile of an end of an anode plate.
FIG. 6 is a schematic diagram of a brightness histogram of an end of an anode plate.
FIG. 7 is a schematic diagram for explaining a step of selecting an image in which an anode plate comes in parallel with X-rays.

### DESCRIPTION OF EMBODIMENTS

Below, the present invention will be described with reference to the drawings and an example in which the present invention is applied to inspection of the position of an electrode of a stacked lithium-ion battery. However, the specific example described below illustrates and describes one embodiment of the present invention, and the present invention should not be construed to be limited to such a specific example.

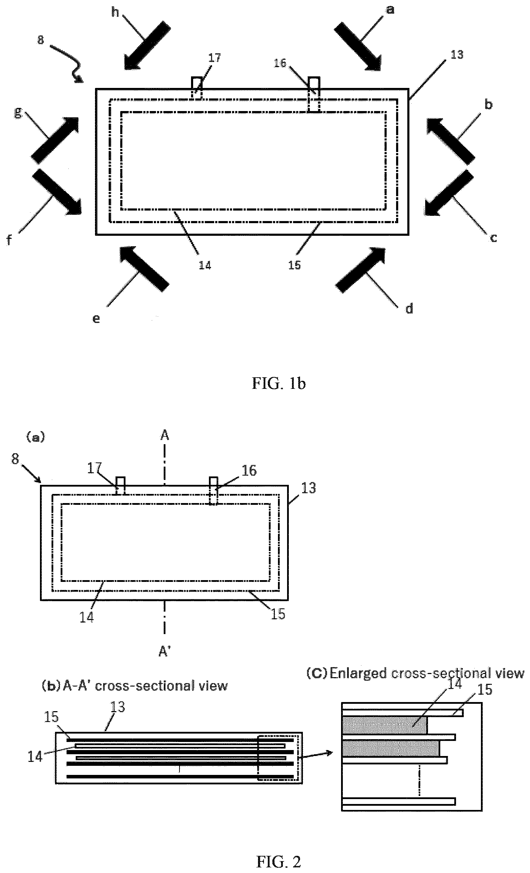

First, the basic constitution of a stacked lithium-ion battery will be described. FIG. 2 is a conceptual diagram depicting the principal part extracted from a lithium-ion battery (hereinafter simply referred to as a "battery"). FIG. 2 (a) is a side view of the battery as viewed sideways, and FIG. 2 (b) is a cross-sectional view of the battery taken along the line A-A'. In addition, FIG. 2 (c) is an enlarged cross-sectional view in which part of the A-A' cross-sectional view is enlarged. As shown in FIGs. 2 (a) to 2 (c), the battery can be a battery containing cathode plates 14, for example, approximately 140 × 85 mm, and anode plates 15, several millimeters larger lengthwise and crosswise than this cathode plate, in which battery, the cathode plates and the anode plates are alternately layered. One layer has a thickness of approximately 0.3 mm, and the whole stack can be a thickness of approximately 3 mm. The cathode plate 14 and the anode plate 15 have a thin resin-made separator (not shown) sandwiched therebetween, and the electrodes (the generic term for the cathode plate 14 and the anode plate 15) are wholly housed in a battery case 13 such as an aluminium case. The gap between the cathode plate and the anode plate (electrodes) is filled with an electrolyte solution (not shown). In addition, a cathode lead wire 16 is connected to each of the cathode plates, and the cathode lead wires 16 are made into one bundle and led outside. The anode plates 15 are similar to this, that is, an anode lead wire 17 is connected to each of the anode plates 15, and the anode lead wires 17 are made into one bundle and led outside.

If such a lithium-ion battery has the cathode plate 14 the edge of which is present more outside than that of the anode plate 15, repeating charge and discharge cycles using the battery can cause metal lithium to precipitate from that portion of the cathode plate 14 which is present more outside than the edge of the anode plate 15. This can cause the electrodes to be short-circuited therebetween, leading to ignition. Because of this, it is important for safety to maintain the positional relationship between the cathode plate 14 and the anode plate 15 so as to prevent the plates from shifting. However, a completed battery results in enclosing the electrodes inside a case for which metal is usually used. According, after the electrodes are enclosed, the position of each electrode cannot be checked by visual observation. Because of this, enclosing the electrodes is followed by using radial rays for fluoroscopy to inspect the electrodes for any positional shift.

The present invention includes a battery inspection method of inspecting a plurality of plate-like electrodes housed generally in parallel in a battery such as the above-mentioned stacked lithium-ion battery. Here, the phrase "generally in parallel" means that the plate-like electrodes do not necessarily need to be housed strictly in parallel, and means that the electrodes are near to being in parallel or are in parallel. As below-mentioned, an inspection method according to the present invention makes it possible to perform an inspection effectively although the plate-like electrodes are not housed strictly in parallel, but the plate-like electrodes are preferably housed in parallel from a viewpoint of eliminating unevenness in the position at which charge and discharge generate a chemical reaction. In addition, the plate-like electrode is preferably plate-like from a viewpoint of the productivity and volumetric efficiency of a battery. Additionally, as seen in FIG. 2 (a), the plate-like electrode is preferably quadrilateral (preferably rectangular or square) in shape as projected sideways, from a viewpoint of enhancing the volumetric efficiency of the electrode used in a battery.

A battery inspection method according to the present invention involves using an X-ray source and a light-receiver configured to receive X-rays from the X-ray source. The X-ray source that can be used is not subject to any particular limitation. In addition, it is possible to use any known X-ray source. Examples of X-ray sources that are preferably used include a microfocus X-ray tube having an X-ray focus 50 µm or less in size as the divergence point of an X-ray beam. The X-ray tube is not limited to any particular tube voltage. A stacked lithium-ion battery often has a large thickness, and thus, the tube voltage to be applied is preferably higher, preferably 100 kV or more, in order to transmit X-rays.

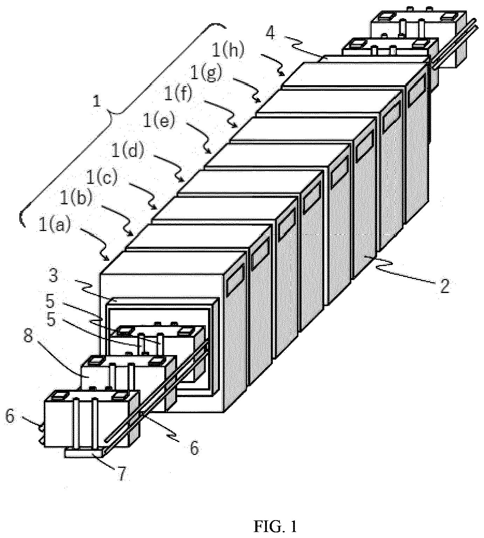

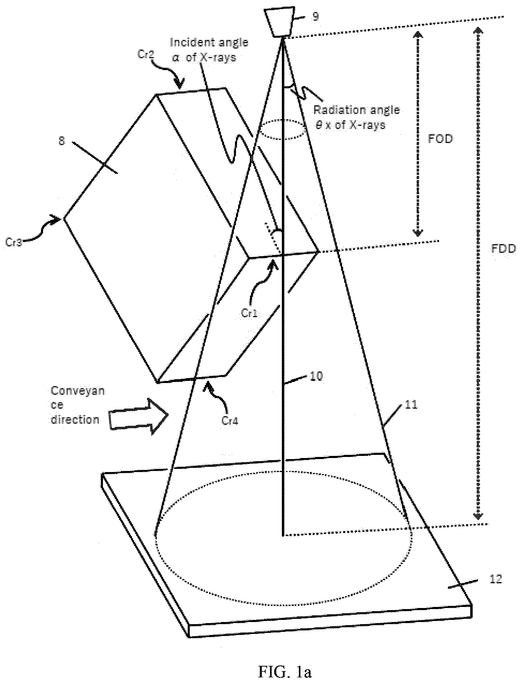

In addition, the light-receiver is not limited to any particular one provided that such a light-receiver can take an image substantially continuously in terms of time. Here, the phrase "can take an image substantially continuously" means that, while the relative positions of each electrode and the X-ray source are displaced and imaged as below-mentioned, the frequency of taking an image (that is, acquisition of image data) is sufficiently larger than the displacement speed of the relative positions. That is, the relationship with the image-taking frequency Ct (1/second) satisfies at least the relationship Ct ≥ M × vt / P, preferably Ct ≥ 2 × M × vt / P, still more preferably Ct ≥ 3 × M × vt / P, particularly preferably Ct ≥ 5 × M × vt / P, assuming that the pixel size of the light-receiver is P (mm), the magnification for image-taking (FOD/FDD; see FIG. 1 (a)) is M, and the relative displacement speed is vt (mm/second). The larger Ct / (M × vt / P), the more preferable, but too large a value causes the computation to be sluggish, compared with the measurement accuracy achieved, and thus, the upper limit is approximately 10 for practical use.

Furthermore, a projection image of the electrode may be such that can be substantially continuously varied and imaged. That the projection image is substantially continuously varied means that, while the relative positions of each electrode and the focus of the X-ray source are displaced and imaged, the angle with the relative positions as the tangent is sufficiently small. That is, assuming that the amount of displacement of a projection image of an electrode is δx (mm), that the angle of the X-ray radiation to the point of displacement is θ, and that the distance between the focus of the X-ray tube and the surface of the X-ray light-receiver is FDD (Focus to Detecter Distance), 5 degrees or less is sufficient as the θ spacing for the tangent tanθ = δx / FDD and for each time when an image is taken. The relationship with the frequency of image-taking Ct is Ct ≥ M × vt / δx.

The light-receiver may be a general-purpose two-dimensional X-ray detector, but to be utilized in industrial applications, an FPD (Flat Panel Detector) of an indirect conversion type is preferably used, considering the capability of achieving high reliability and high accuracy with which detection is performed even at the periphery of the detector. An FPD of an indirect conversion type has no such restriction as applicable temperature, and has excellent mechanical strength, compared with a detector of a direct conversion type. Accordingly, an X-ray detector of an indirect conversion type has excellent handleability. Furthermore, an FPD of an indirect conversion type preferably includes a cell-style scintillator. In an FPD of an indirect conversion type, a scintillator panel is used to convert radial rays to visible light. A scintillator panel contains an X-ray phosphor such as caesium iodide (CsI), the X-ray phosphor emits visible light in accordance with the X-rays radiated, and the light emitted is converted to an electric signal with a TFT (Thin Film Transistor) or a CCD (Charge-Coupled Device), whereby the X-ray information is converted to digital image information. However, an FPD of an indirect conversion type tends to present an image having low sharpness, for example, because visible light is scattered by the X-ray phosphor itself when the phosphor emits the light. On the other hand, an FPD for which a cell-style scintillator is used has cells partitioned with partition walls and filled with a phosphor, and thus, makes it possible to inhibit the influence of the scattering of the visible light. As a result, an FPD including a cell-style scintillator presents high sharpness, and can detect the position of an end of an electrode of a lithium-ion battery and the position of a defect of the electrode with high accuracy. From a viewpoint of making it possible to easily form a cell-style scintillator having a large area and high sharpness, the cell-style scintillator is more preferably produced so as to contain partitions that are fabricated by photolithography with a photosensitive paste containing glass powder and thus are composed of glass as a main component.

The light-receiving element of the X-ray detector is not limited to any particular pixel size, and one side is preferably 20 to 300 µm, most preferably 50 to 150 µm. The pixel size of less than 20 µm poses a possibility that minute impurities not contributive to deformation or defect of the electrode are detected, with the result that an acceptable product is determined to be an unacceptable product by mistake. In addition, such a pixel size causes image data to be enormous, and tends to prolong the time taken for signal readout and image processing. On the other hand, the pixel size of more than 300 µm poses a possibility that the position of an electrode cannot be detected sufficiently.

In a general and preferable aspect, an X-ray detector is disposed at the position opposed to an X-ray source with the conveyance face sandwiched therebetween in such a manner that the central axis of the X-ray beam conforms to the center of the detector, and that the radiation axis is vertical to the face of the detector. In this regard, the magnification M (FOD/FDD), which is the ratio of the distance FOD (Focus to Object Distance) between the X-ray tube focus and the lithium-ion battery to the distance FDD (Focus to Detecter Distance) between the X-ray tube focus to the surface of the X-ray detector, is preferably 3 or more. In addition, the X-ray tube and the X-ray detector are preferably disposed in such a manner that the FDD keeps constant.

In addition, an inspection method according to the present invention involves using means that makes it possible to displace the relative positions of the X-ray source and the electrode in a direction vertical to a direction in which the plate-like electrode extends. That is, assuming a displacement vector as viewed from one side to another, causing a displacement having a vector in the direction vertical to the direction in which the plate-like electrode extends (that is, to the direction in which the broadest face of the plate-like electrode expands) makes it possible that all the plate-like electrodes are observed sideways, from above, or from below. The most typical displacement is a displacement in the direction normal to the broadest face of each of the plate-like electrodes housed in array with the face of one electrode opposed to that of another (thus, housed with the faces generally in parallel in a battery).

Here, examples of means configured to displace an object include, but are not limited particularly to, a conveyance means such as a conveyor configured to transfer batteries, a transfer means configured to transfer an X-ray source and a light-receiver that are attached onto a mounting or the like, and both of the means used together.

Next, the present invention will be described with reference to the drawings and the most typical example of a method of inspecting a battery, in which example, a battery is conveyed on a conveyor with X-rays radiated from above the battery. Here, for simplicity of explanation, the description gives an example in which the direction of conveyance of a battery conforms to the direction normal to the broadest face of each of the plate-like electrodes housed generally in parallel in the battery, and in which the distance (FDD) between the X-ray source and the light-receiver is constant throughout the measurement period. In this regard, it will be easily understood that, even though the direction of conveyance of a battery is a little shifted from the direction normal to the broadest face of each of the plate-like electrodes housed generally in parallel battery, the shift can be corrected by computation if the directions are known. The same thing applies to the distance between the X-ray source and the light-receiver.

In the example depicted in FIG. 1, the X-ray inspection device 1 has a housing 2. The housing 2 is incorporated with a conveyance device 7 including a movement mechanism that moves uniaxially to convey a battery. The conveyance device 7 can be made part of production facilities for batteries, and in this case, the device is also part of the X-ray inspection device 1, and is a conveyance mechanism having a conveyance face on which a battery 8 is conveyed in a predetermined moving direction. In this regard, in order that the conveyance device may not be projected on a transmitted X-ray image, it is preferable to use a conveyance device the conveyance face of which has the shorter side (in other words, the width of the conveyance face) shorter than the width-direction length of the face in contact with the conveyance face of the battery 8. The housing 2 has a transport inlet 3 through which the battery 8 is transported into the housing, and a transport outlet 4 through which the battery 8 is transported out of the housing. The conveyance device 7 passes through the transport inlet 3 and the transport outlet 4, thus passing through the housing 2. For safety of operators, it is usual that the housing 2, the transport inlet 3, and the transport outlet 4 have, as an inner wall, a shield wall composed of metal capable of shielding X-rays, such as lead or stainless steel, and that the openings of the transport inlet 3 and the transport outlet 4 have a rubber-made shield cover for preventing X-rays from leaking out. A guide member 6 is provided above the conveyance device 7, and the guide member 6 guides the battery 8 so that the battery can be conveyed at the position central in the width direction on the conveyance device 7. Two pairs of right and left guide members 6, totaling four guide members, are provided so as to sandwich the battery 8 in the width direction. The guide members 6 are made of a material having high X-ray transmittance, and are provided continuously so as to pass through from the opening 3 to the opening 4 in the same manner as the conveyance passage. The conveyance device 7 is equipped with a fixing guide 5 so that the battery 8 cannot fall during conveyance, and thus, the battery 8 is placed at a predetermined position in the conveyance mechanism so that the electrodes can be perpendicular to the conveyance direction.

FIG. 1a is a schematic view depicting the inside of the X-ray detector 1 (a) depicted in FIG. 1. In this Figure, the detector is viewed obliquely from above. This Figure depicts the positional relationship among the battery 8 conveyed into the housing 2, the X-ray tube (X-ray source 9) radiating an X-ray beam, and the X-ray detector 12 (light-receiver) that two-dimensionally detects X-rays transmitting the battery as an object of inspection to give a transmitted image. Here, this Figure depicts no incidental equipment such as a high-voltage generator for supplying the X-ray tube with high voltage electrical power, or an X-ray controller for controlling the tube voltage and the tube current. An X-ray beam is usually radiated radially, and thus, the space irradiated with X-rays is usually conical. Owing to the radial radiation, an image taken of a substance nearer the X-ray tube is more enlarged in the X-ray detector 12, and an image taken of a substance farther from the X-ray tube is less enlarged in the X-ray detector 12. Therefore, if an object of measurement has the same shape, the size of an image can be used to know the distance between the spot where the object of measurement is measured and the X-ray source. In addition, a signal (image information) outputted from the X-ray detector 12 is transferred to an image processing device for signal processing, processed by a data processing unit (not shown), and used to determine whether the object is acceptable. The signal processing unit and the data processing unit can be housed in the housing 2.

The X-ray source is disposed so as to irradiate a corner of the group of plate-like electrodes in the X-ray radiation region, as shown in FIG. 1a, the image taken of each of the plate-like electrodes is tapered, with the result that the tip of the image taken represents the corner of the electrode. The position of the corner in the image taken can be used to know the position of the corner in the battery. The angle α between the central axis 10 of the X-ray radiation region and the upper side of the electrode (here, the upper side of the electrode and the upper face of the battery are usually substantially in parallel, and thus, for convenience, the angle can be replaced with the angle between the central axis 11 of the X-ray radiation region and the upper face of the battery) is preferably 10 to 60° (see FIG. 1a) from a viewpoint of achievability of good measurement accuracy. In addition, further irradiating not only one corner but also four corners Cr1 to Cr4 in the battery 8, still more preferably further irradiating the same corners in the opposite direction (irradiating upward from the lower portion in the example in FIG. 1a), and preliminarily knowing the dimensional information on the electrodes make it possible to obtain information on the position of each electrode existing in the battery (absolute positional information in the battery or information on the mutual positional relationships of the plate-like electrodes). FIG. 1b illustrates the corners irradiated with X-rays and the radiation directions (a to h in FIG. 1b) in the X-ray detectors 1 (a) to 1 (h), assuming that the battery 8 is viewed sideways. In this regard, from a viewpoint of measurement accuracy, the X-ray source 9 and the X-ray detector 12 should be disposed so that no image can be taken of any portion of the conveyance device or the battery terminals. Irradiating one corner with X-rays in two directions makes it possible to obtain positional information with high accuracy.

Images are substantially continuously taken of all the plurality of electrodes housed in the battery. Conveying the battery 8 through the conveyance device 7 allows all the plate-like electrodes to pass through the X-ray radiation region, and in addition, taking images substantially continuously makes it possible to obtain information sufficient for image analysis.

Next, a step of processing images taken and computing and a step of determining whether a battery is acceptable will be described. Image processing and computing are performed using a computer. This computer may include a control device for the conveyance device 7 and the X-ray source 9.

As above-mentioned, the group of plate-like electrodes are conveyed by the conveyance device 7, and thus enters the radiation region of X-rays from the X-ray source 9. At this time, the electrode that has first entered is recognized as an image to be first observed. The position of an image moves as the battery is conveyed, but if the conveyance speed is known, the correspondence relationship between the image and the electrode can be pursued. Additionally, assuming that the number of the electrodes in the battery is n, image information can be obtained on each of n electrodes between the entry into and exit from the X-ray radiation region (to be accurate, the range in which X-ray detector 12 can perform detection and image-taking) during the period between the time when the first electrode has entered the X-ray radiation region and the time when the last electrode has left the X-ray radiation region.

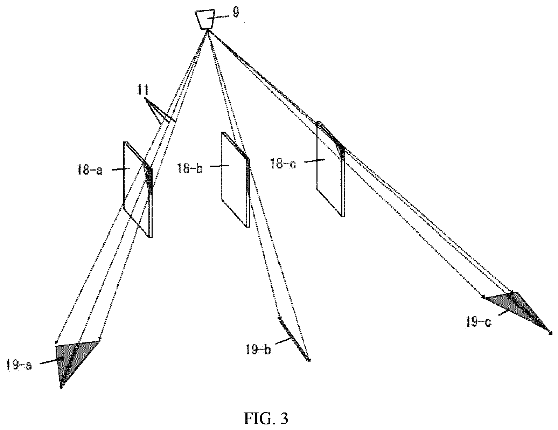

Subsequently, selecting the image having the smallest projection width from among the images taken will be described with reference to each of the electrodes imaged. X-rays are radiated radially from a radiation source, and thus, the broadest face of an electrode is irradiated with many X-rays at a position where the electrode has just entered the radiation region. Because of this, the larger the total amount of radiation to such a face, the larger the width of an image of the electrode. Such an image taken is an image in which the expansion from the position of the image corresponding to a corner of the electrode is large (19-a in FIG. 3). As the electrode moves and comes nearer the center of the radiation region, the total amount of radiation to the broadest face of the electrode decreases, and thus, the expansion of the image gradually decreases. When the X-rays illuminating the electrode and the broadest face of the electrode come in parallel, the X-rays are ideally radiated only to the end face of the plate-like electrode, resulting in an image in which the expansion from the position of the image corresponding to the corner of the electrode is the smallest, that is, an image having the smallest projection width (19-b in FIG. 3).

Ideally, the plurality of plate-like electrodes are housed in such a manner that the broadest faces of the respective electrodes are in parallel, but actually, the faces are housed not exactly in parallel in some cases, and thus, all the images of the respective electrodes taken at the same position in the X-ray detector 12 do not necessary have the smallest projection width. Then, selecting an image having the smallest projection width from among the images taken of each electrode makes it possible to extract the image as an image taken when the X-rays illuminating the electrode and the broadest face of the electrode are the nearest to being in parallel. Whether the projection width is the smallest can be known, for example, by the angle of the tip of the image or the width of the image at a position at a given distance apart from the tip of the image. In this regard, the image-taking is substantially continuous, and thus, extraction of the image can be performed reliably on each of n electrodes. Additionally, as the frequency of image-taking is higher, an image having a higher degree of parallelism between the X-rays illuminating the electrode and the broadest face of the electrode can be extracted, and the measurement accuracy is higher.

If the thickness of the plate-like electrode in the image extracted is known, the width of the image represents a distance from the X-ray source, and thus, the position of the end face of the electrode can be identified by computation using the distance together with information obtained at the point of time when the image is taken. Sincethe corners of the group of electrodes are irradiated with X-rays, the position of the tip of the image gives the position of the corner of the electrode, and the width of the image gives the positional information on the end face of the electrode. In addition, making reference to data obtained from an adjacent electrode makes it possible to know the positional relationship of each electrode. The corner is irradiated in such a manner that the corner of the plate-like electrode is irradiated in a direction in which the X-rays are transmitted through two sides constituting the corner (see FIG. 1a).

Then, in a determination step, acceptance or rejection is determined with reference to the resulting information on the position of the electrode and a standard (acceptance criteria), and the results are outputted on a display device system and/or a control device system.

Below, this example will be further detailed.

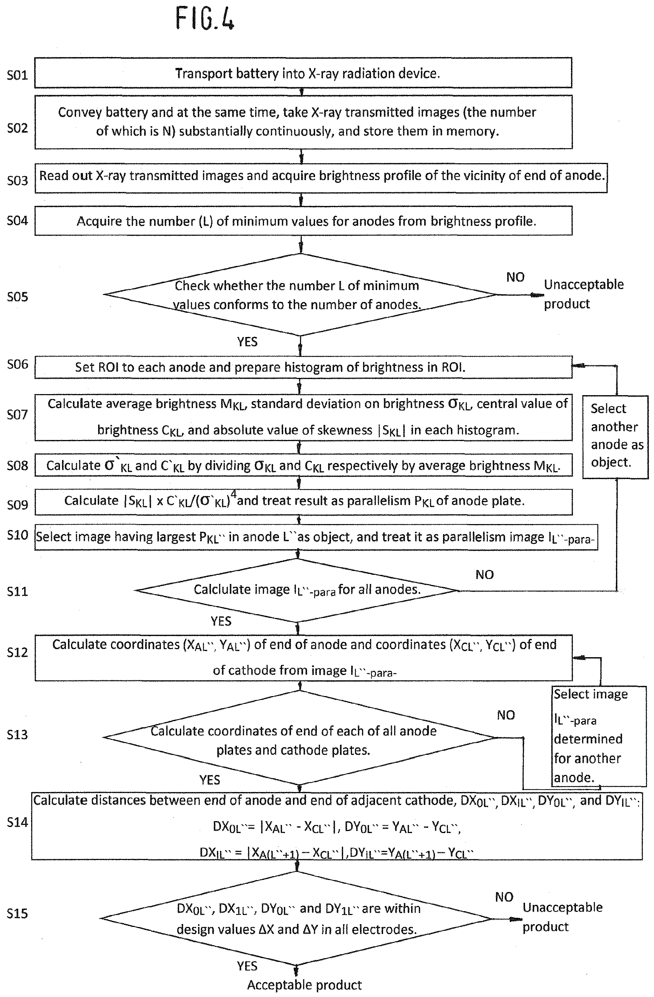

FIG. 4 is a flow chart illustrating one example of a measurement process. In step S01, a battery is transported into an X-ray inspection device by a conveyance device. In step S02, the battery as an object of measurement enters the X-ray radiation region, and a plurality of (N) X-ray transmitted images are acquired from each of all the electrodes (assuming that the number of the electrodes is n) until the time when the battery leaves the radiation region. Here, N transmitted X-ray images housed in the memory are represented by I(k) (k = 1, 2, ..., and N) in order of image-taking. An X-ray transmitted image is an image obtained by two-dimensionally outputting the transmission intensity of X-rays as a brightness value using an X-ray detector 13. At a spot having a high X-ray transmission intensity, a high brightness value is detected (brightly), and oppositely, at a spot having a low X-ray transmission intensity, a low brightness value is detected (darkly).

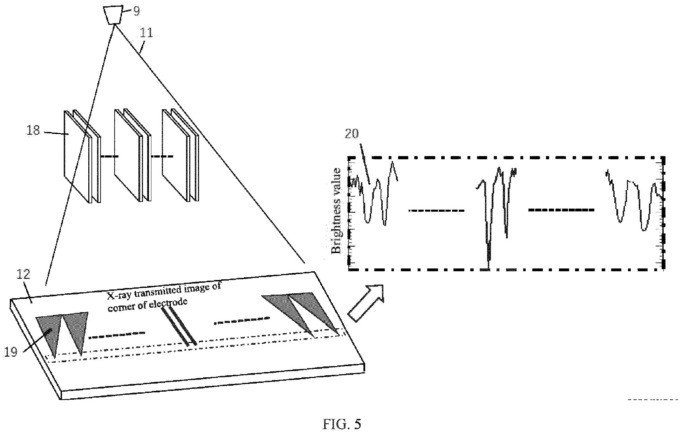

In step S03, the X-ray transmitted images I(k) stored are read out number by number, and a brightness profile of an anode plate is acquired from the X-ray transmitted image read out. FIG. 5 illustrates an X-ray transmitted image and a brightness profile in the vicinity of an end of an anode plate, which were both acquired at a point of time when the electrode entered an X-ray radiation region. The brightness in the vicinity of the end of the anode plate is acquired in the array direction of electrodes, and plotted in a graph with the brightness value in ordinate and the array direction of electrodes in abscissa, thus affording a brightness profile in the form 20 that is a waveform having a plurality of maxima and minima. The position of a minimum value represents the position of an anode plate. As above-mentioned, the battery is moved, varying the position of the brightness peak. The moving speed of the battery is known, and thus, the brightness peaks in each transmitted image can be attributed to the respective electrodes. A brightness profile is acquired for each of all the X-ray transmitted images. In step S04, the number (L) of minimum values corresponding to the anode plates is determined from the brightness profile acquired of the anode plates. In step S05, the number (L) of minimum values determined in step S04 and the number n of the electrodes are compared. Whether L conforms to n, that is, whether the number (L) of minimum values is the same as the number of the anode plates is determined. Any nonconformity found between both numbers means that the number of the electrodes is seemingly insufficient or excessive, for example, that any one of the electrodes resulted in being combined with another or being separated. Such a product is determined to be an unacceptable product. If conformity is determined, the next step follows.

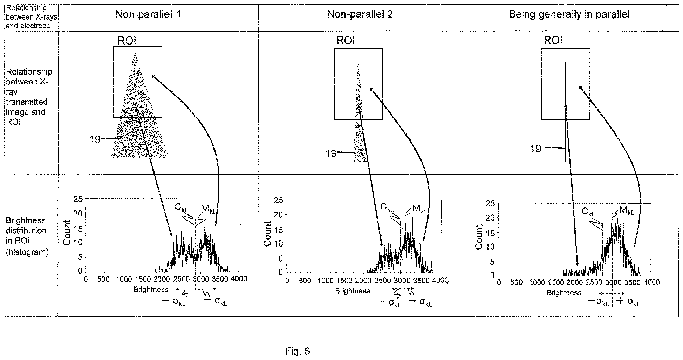

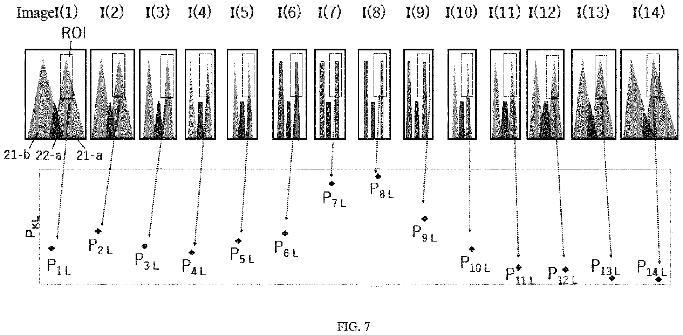

Steps S06 to 11, in which an individual electrode in particular is taken for example, are steps of selecting an image in which the electrode is in parallel (or generally in parallel) with X-rays. As depicted in FIG. 5 in which an individual electrode in particular is taken for example, the X-ray transmitted image is such that the shape of the peak varies between the entry into and exit from the X-ray radiation region. First in step S06, an ROI (Region of Interest) is set to the end portion (the region of the tip of a peak) in the X-ray transmitted image of the electrode extracted from each image, and a histogram of brightness in the portion is obtained. This ROI determines the height and the width (see the rectangulars depicted in FIG. 6 and FIG. 7) so as not to contain a peak derived from an adjacent electrode. The area of ROI may be freely determined provided that such an area is not problematic to computation. In this regard, the number of peak images obtained is the same as the number of images taken reflecting an image as an object of computation, and it is desirable that the height and width of the ROI are the same for the electrodes as objects of computation because such a height and width makes the computation easy and convenient. On the other hand, the height and width can be varied electrode by electrode as an object of computation, considering, for example, the duplication relationship with the image of an adjacent electrode in the image taken. In addition, the position of the top peak in the ROI should be set to the same position (referring to FIG. 7, the top of the brightness peak should be located below the midpoint of the upper side of the rectangular representing the ROI, and the distance from the upper side should be made constant). Here, the histogram of brightness is a diagram plotting the brightness value in abscissa and the number of pixels representing the brightness value in ordinate. FIG. 6 illustrates a histogram of brightness. In cases where the electrode and the X-rays are not in parallel, the number of pixels for low brightness is larger, that is, the X-rays attenuated by the electrode reach the detector, and the number of pixels for high brightness is smaller, that is, the X-rays hardly blocked by the electrode reach the detector, as shown in the left diagram in FIG. 6. As the electrode and X-rays become nearer to being in parallel, the number of pixels for low brightness becomes smaller (from the left diagram to the central diagram in FIG. 6). When both are in parallel or near to being in parallel (the right diagram in FIG. 6), the number of pixels for low brightness becomes the smallest, and on the other hand, the number of pixels for high brightness is the largest. In step S07, the average brightness M_{kL}, the standard deviation of the brightness σ_{kL}, the central value of the brightness C_{kL} ((largest brightness value + smallest brightness value) / 2), and the absolute value of skewness |S_{kL}| in brightness distribution are calculated from the histogram of brightness. FIG. 6 illustrates the average brightness, the standard deviation, the central value of brightness in the histogram of brightness. In step S08, the standard deviation σ_{kL}, σ'_{kL} (= σ_{kL} / M_{kL}) obtained by standardizing the center of brightness C_{kL} by the average brightness, and the standardized central value C'_{kL} (= C_{kL} / M_{kL}) are determined. In step S09, parallelism defined by P_{kL} = |S_{kL}| ×C'_{kL} / (σ'_{kL})⁴ is calculated.

In step 10, the values of parallelism P_{kL} determined from the images taken of an anode plate as an object are compared. An X-ray transmitted image presenting the highest parallelism P_{kL} is an image (I_{L"}-para) in which the anode plate as an object and the X-rays are the nearest to being in parallel. For example, in cases where 14 X-ray transmitted images are taken of an anode plate, the relationship between the values of parallelism P_{kL} of the X-ray transmitted images (I(1) to I(14)) and the X-ray transmitted images is as in FIG. 7. In this case, I(8) is the image (I_{L"-para}) in which the anode plate and the X-rays are the nearest to being in parallel.

Such a determination is performed on all the anode plates, and the I_{L"-para} value for each anode plate is determined.

Subsequently, the positional relationship between the anode plate and the cathode plate is determined using each image I_{L"-para} extracted for each anode plate.

In step S12, the image I_{L"-para} is binarized with a suitable brightness, and the outline of the cathode plate 14 and the outline of the anode plate 15 are extracted by pattern recognition. The end portion of the outline obtained corresponds to the corner of the electrode, and the coordinates (in this connection, the portion corresponds to the minimum value and the maximum value in the brightness profile) are determined as (X_{CL"}, Y_{CL"}) for the cathode plate and as (X_{AL"}, Y_{AL"}) for the anode plate. In this case, it is convenient that the coordinates in the image are converted in such a manner that the end of the electrode has a large value, assuming that X is the direction in which the electrodes are arrayed, and that Y is the direction vertical to the direction in which the electrodes are arrayed. This determination is performed on the image I_{L"-para} determined for each electrode (steps S12 to S13). After such determination is finished for all electrodes, step S14 follows.

In step S14, the distances DX_{0L''} = |X_{AL''} - X_{CL"}|, DX_{1L"} = |X_{A(L" + 1)} - X_{CL"}|, DY_{0L"} = Y_{AL"} - Y_{CL"}, and DY_{1L"} = Y_{A(L" + 1)} - Y_{CL"} are determined between the coordinates of the end of the cathode plate and the coordinates of the end of the anode plate adjacent to the cathode plate. In step S15, whether each electrode is acceptable is determined as follows: assuming that the tolerable amounts of shift in the X direction and in the Y direction are ΔX and ΔY (ΔX and ΔY are positive real numbers) respectively, the anode plate L" and an adjacent cathode plate are determined to be acceptable products when 0 < DX_{0L"} < ΔX, 0 < DX_{1L"} < ΔX, 0 < DY_{0L"}< ΔY, and 0< DY_{1L"} < ΔY are satisfied, and are determined to be unacceptable products when such conditions are not satisfied. When no electrode is determined to be an unacceptable product, the battery is determined to be an acceptable product in respect of one corner as an object of measurement. The other three corners are determined in the same manner. When all the four corners are determined to be acceptable, the battery is determined to be an acceptable product, all in all.

### (Industrial Applicability)

According to the present invention, a battery is moved in a direction vertical to the layered face, during which X-ray transmitted images are acquired, and this manner makes it possible to acquire a plurality of X-ray images from an electrode, wherein the images are taken at various X-ray radiation angles. In addition, computation is performed to select an image in parallel with the X-rays from among the plurality of images acquired from each electrode. Accordingly, even if the tip of the electrode is a little bent, each electrode does not need to be located in parallel with the X-rays, thus making it possible to inspect the positional shift of the electrodes of a high-capacity stacked battery in a short time.

### Reference Signs List

1, 1 (a) to 1 (h): X-ray inspection devices
2: Housing
3: Transport inlet
4: Transport outlet
5: Fixing guide
6: Guide member
7: Conveyance device
8: Battery
9: X-ray source
10: X-ray axis
11: X-rays
12: X-ray detector
13: Battery case
14: Cathode plate
15: Anode plate
16: Lead wire of cathode terminal
17: Lead wire of anode terminal
18, 18-a, 18-b, 18-c: Electrodes
19, 19-a, 19-b, 19-c: X-ray transmitted image
20: Brightness profile of end of electrode
21-a, 21-b: X-ray transmitted images derived from anode plate
22-a: X-ray transmitted images derived from cathode plate
a to h: X-ray radiation direction

## Claims

1. A battery inspection device comprising at least:
an X-ray source (9);
a light-receiver (12) capable of receiving X-rays (11) from said X-ray source substantially continuously;
a displacement means (7) configured to displace the relative positions of a battery (8) and said X-ray source in a direction vertical to a direction in which the plate-like electrode extends, wherein the battery contains a plurality of plate-like electrodes (18, 18a, 18b, 18c) housed generally in parallel in said battery (8); and
a determination means configured to acquire image information from said light-receiver (12) and positional information of said displacement means (7), and compute on the basis of said image information and said positional information to determine whether said battery (8) is acceptable;
wherein the computation on the basis of said image information and said positional information comprises the steps of: selecting the image having the smallest projection width from among images taken of each of said plate-like electrodes; and
computing the spatial position of said electrode and the relative positional shift between the end of the electrode as a cathode and the end of the electrode as an anode in data on said image selected,
wherein said X-ray source (9) is disposed so as to be able to radiate said X-rays (11) to a corner of the plate-like electrode (18, 18a, 18b, 18c) in a direction in which said X-rays are transmitted through two sides constituting said corner.

2. The battery inspection device according to claim 1 wherein said displacement means is a conveyance device configured to convey said battery.

3. The battery inspection device according to claim 1 or 2, wherein said light-receiver is an X-ray detector of an indirect conversion type.

4. The battery inspection device according to claim 3, wherein said X-ray detector of an indirect conversion type comprises a cell-style scintillator.

5. A battery inspection method of inspecting the positions of a plurality of plate-like electrodes (18, 18a, 18b, 18c) housed generally in parallel in a battery (8), said battery inspection method comprising the steps of:
1) using an X-ray source (9) disposed so as to be able to radiate X-rays (11) in a direction in which said plate-like electrode (18, 18a, 18b, 18c) extends, a light-receiver (12) configured to receive said X-rays (11) from said X-ray source (9), and means (7) capable of displacing the relative positions of said X-ray source (9) and the electrode (18, 18a, 18b, 18c) in a direction vertical to the direction in which said plate-like electrode extends, to displace the relative positions of said X-ray source (9) and said electrode (18, 18a, 18b, 18c) in said direction vertical to said direction in which said plate-like electrode (18, 18a, 18b, 18c) extends, and at the same time, substantially continuously take images of all of the plurality of electrodes (18, 18a, 18b, 18c) housed in said battery (8):
2) selecting the image having the smallest projection width from among said images substantially continuously taken of each of said electrodes (18, 18a, 18b, 18c);
3) computing the position of each of said electrodes (18, 18a, 18b, 18c) in said battery (8) on the basis of data in said image selected, and;
4) using the computation results as a base to determine whether said battery (8) is acceptable,
wherein the radiation and image-taking of said X-rays (11). are performed in such a manner that said X-rays (11) are radiated to a corner of said plate-like electrode (18, 18a, 18b, 18c) in a direction in which said X-rays (11) are transmitted through two sides constituting said corner, and the step 2) and the step 3) are performed on each corner, and the step 4) comprises:
determining whether said battery (8) is acceptable, by determining the spatial position of said electrode (18, 18a, 18b, 18c) and the relative positional shift between the end of the electrode (18, 18a, 18b, 18c) as a cathode and the end of the electrode as an anode from said images selected.

6. The battery inspection method according to claim 5, wherein said light-receiver is an X-ray detector of an indirect conversion type.

7. The battery inspection method according to claim 6, wherein said X-ray detector of an indirect conversion type comprises a cell-style scintillator.

## Patentansprüche

1. Batterieprüfvorrichtung, die wenigstens umfasst:
eine Röntgenstrahlquelle (9),
einen Lichtempfänger (12), der befähigt ist zum im Wesentlichen kontinuierlichen Empfangen von Röntgenstrahlen (11) von der Röntgenstrahlquelle,
eine Verschiebungseinrichtung (7), die konfiguriert ist zum Verschieben der relativen Positionen einer Batterie (8) und der Röntgenstrahlquelle in einer Richtung vertikal zu der Richtung, in der sich eine plattenartige Elektrode erstreckt, wobei die Batterie eine Vielzahl von plattenartigen Elektroden (18, 18a, 18b, 18c) enthält, die allgemein parallel in der Batterie (8) aufgenommen sind, und
eine Bestimmungseinrichtung, die konfiguriert ist zum Erhalten von Bildinformationen von dem Lichtempfänger (12) und von Positionsinformationen der Verschiebungseinrichtung (7) und zum Berechnen auf der Basis der Bildinformationen und der Positionsinformationen für das Bestimmen, ob die Batterie (8) annehmbar ist,
wobei das Berechnen auf der Basis der Bildinformationen und der Positionsinformationen die folgenden Schritte umfasst: Auswählen des Bilds mit der kleinsten Projektionsbreite innerhalb der durch jede der plattenartigen Elektroden aufgenommenen Bilder; und Berechnen der räumlichen Position der Elektrode und der relativen Positionsverschiebung zwischen dem Ende der Elektrode als einer Kathode und dem Ende der Elektrode als einer Anode in Daten zu dem ausgewählten Bild,
wobei die Röntgenstrahlquelle (9) derart angeordnet ist, dass sie die Röntgenstrahlen (11) zu einer Ecke der plattenartigen Elektrode (18, 18a, 18b, 18c) in einer Richtung strahlen kann, in der die Röntgenstrahlen durch zwei die Ecke bildende Seiten hindurchgehen.

2. Batterieprüfvorrichtung nach Anspruch 1, wobei die Verschiebungseinrichtung eine Fördereinrichtung ist, die für das Befördern der Batterie konfiguriert ist.

3. Batterieprüfvorrichtung nach Anspruch 1 oder 2, wobei der Lichtempfänger ein Röntgenstrahldetektor eines indirekten Wandlungstyps ist.

4. Batterieprüfvorrichtung nach Anspruch 3, wobei der Röntgenstrahldetektor des indirekten Wandlungstyps des indirekten Wandlungstyps einen zellenartigen Szintillator umfasst.

5. Batterieprüfverfahren zum Prüfen der Positionen einer Vielzahl von plattenartigen Elektroden (18, 18a, 18b, 18c), die allgemein parallel in einer Batterie aufgenommen sind, wobei das Batterieprüfverfahren die folgenden Schritte umfasst:
1) Verwenden einer Röntgenstrahlquelle (9), die derart angeordnet ist, dass sie Röntgenstrahlen (11) in einer Richtung, in der sich eine plattenartigen Elektrode (18, 18a, 18b, 18c) erstreckt, strahlen kann, eines Lichtempfängers (12), der konfiguriert ist zum Empfangen der Röntgenstrahlen (11) von der Röntgenstrahlquelle (9), und von Einrichtungen, die die relativen Positionen der Röntgenstrahlquelle (9) und der Elektrode (18, 18a, 18b, 18c) in einer Richtung vertikal zu der Richtung, in der sich die plattenartige Elektrode erstreckt, verschieben können, um die relativen Positionen der Röntgenstrahlquelle (9) und der Elektrode (18, 18a, 18b, 18c) in der Richtung vertikal zu der Richtung, in der sich die plattenartige Elektrode (18, 18a, 18b, 18c) erstreckt, zu verschieben und gleichzeitig im Wesentlichen kontinuierlich Bilder aller der in der Batterie (8) aufgenommenen Vielzahl von Elektroden (18, 18a, 18b, 18c) aufzunehmen,
2) Auswählen des Bilds mit der kleinsten Projektionsbreite innerhalb der im Wesentlichen kontinuierlich aufgenommenen Bilder jeder der Elektroden (18, 18a, 18b, 18c),
3) Berechnen der Position jeder der Elektroden (18, 18a, 18b, 18c) in der Batterie (8) auf der Basis von Daten in dem ausgewählten Bild, und
4) Verwenden der Berechnungsergebnisse als einer Basis für das Bestimmen, ob die Batterie (8) annehmbar ist, wobei das Strahlen und das Bildaufnehmen der Röntgenstrahlen (11) derart durchgeführt werden, dass die Röntgenstrahlen zu einer Ecke der plattenartigen Elektrode (18, 18a, 18b, 18c) in einer Richtung gestrahlt werden, in der die Röntgenstrahlen (11) durch zwei die Ecke bildende Seiten hindurchgehen, wobei der Schritt 2) und der Schritt 3) an jeder Ecke durchgeführt werden und der Schritt 4) umfasst: Bestimmen, ob die Batterie (8) annehmbar ist, durch das Bestimmen der räumlichen Position der Elektrode (18, 18a, 18b, 18c) und der relativen Positionsverschiebung zwischen dem Ende der Elektrode (18, 18a, 18b, 18c) als einer Kathode und dem Ende der Elektrode als einer Anode aus den ausgewählten Bildern.

6. Batterieprüfverfahren nach Anspruch 5, wobei der Lichtempfänger ein Röntgenstrahldetektor eines indirekten Wandlungstyps ist.

7. Batterieprüfverfahren nach Anspruch 6, wobei der Röntgenstrahldetektor des indirekten Wandlungstyps einen zellenartigen Szintillator umfasst.

## Revendications

1. Dispositif d'inspection de batterie comprenant au moins :
une source de rayons X (9) ;
un photorécepteur (12) apte à recevoir des rayons X (11) depuis ladite source de rayons X de manière essentiellement continue ;
un moyen de déplacement (7) conçu pour déplacer les positions relatives d'une batterie (8) et de ladite source de rayons X dans une direction verticale vis-à-vis d'une direction dans laquelle l'électrode plate s'étend, dans lequel la batterie contient une pluralité d'électrodes plates (18, 18a, 18b, 18c) logées de manière générale en parallèle dans ladite batterie (8) ; et
un moyen de détermination conçu pour acquérir des informations d'image depuis ledit photorécepteur (12) et des informations de position dudit moyen de déplacement (7), et calculer sur la base desdites informations d'image et desdites informations de position pour déterminer si ladite batterie (8) est acceptable ;
dans lequel le calcul sur la base desdites informations d'image et desdites informations de position comprend les étapes consistant à : sélectionner l'image ayant la plus petite largeur de projection parmi les images prises de chacune des électrodes plates ; et calculer la position spatiale de ladite électrode et le décalage de position relatif entre l'extrémité de l'électrode en tant que cathode et l'extrémité de l'électrode en tant qu'anode dans les données sur ladite image sélectionnée,
dans lequel ladite source de rayons X (9) est disposée de sorte à pouvoir faire rayonner lesdits rayons X (11) jusqu'à un coin de l'électrode plate (18, 18a, 18b, 18c) dans une direction dans laquelle lesdits rayons X sont transmis à travers deux côtés constitutifs dudit coin.

2. Dispositif d'inspection de batterie selon la revendication 1 dans lequel ledit moyen de déplacement est un dispositif de convoyage conçu pour convoyer ladite batterie.

3. Dispositif d'inspection de batterie selon la revendication 1 ou 2, dans lequel ledit photorécepteur est un détecteur de rayons X de type conversion indirecte.

4. Dispositif d'inspection de batterie selon la revendication 3, dans lequel ledit détecteur de rayons X de type conversion indirecte comprend un scintillateur de style cellulaire.

5. Procédé d'inspection de batterie destiné à inspecter les positions d'une pluralité d'électrodes plates (18, 18a, 18b, 18c) logées de manière généralement parallèle dans une batterie (8), ledit procédé d'inspection de batterie comprenant les étapes consistant à :
1) utiliser une source de rayons X (9) disposée de manière à pouvoir faire rayonner des rayons X (11) dans une direction dans laquelle ladite électrode plate (18, 18a, 18b, 18c) s'étend, un photorécepteur (12) conçu pour recevoir lesdits rayons X (11) depuis ladite source de rayons X (9), et un moyen (7) capable de déplacer les positions relatives de ladite source de rayons X (9) et de l'électrode (18, 18a, 18b, 18c) dans une direction verticale vis-à-vis de la direction dans laquelle ladite électrode plate s'étend, afin de déplacer les positions relatives de ladite source de rayons X (9) et de ladite électrode (18, 18a, 18b, 18c) dans ladite direction verticale à ladite direction dans laquelle ladite électrode plate (18, 18a, 18b, 18c) s'étend, et simultanément, prendre de manière essentiellement continue des images de la totalité de la pluralité d'électrodes (18, 18a, 18b, 18c) logées dans ladite batterie (8) :
2) sélectionner l'image ayant la largeur de projection la plus petite parmi lesdites images prises de manière essentiellement continue de chacune desdites électrodes (18, 18a, 18b, 18c) ;
3) calculer la position de chacune desdites électrodes (18, 18a, 18b, 18c) dans ladite batterie (8) sur la base des données dans ladite image sélectionnée, et ;
4) utiliser les résultats de calcul en tant que base pour déterminer si ladite batterie (8) est acceptable,
dans lequel le rayonnement et la prise d'images desdits rayons X (11) sont réalisés de telle manière que lesdits rayons X (11) sont rayonnés vers un coin de ladite électrode plate (18, 18a, 18b, 18c) dans une direction dans laquelle lesdits rayons X (11) sont transmis à travers deux côtés constituant ledit coin, et l'étape 2) et l'étape 3) sont réalisées sur chaque coin, et l'étape 4) comprend une étape consistant à :
déterminer si ladite batterie (8) est acceptable, en déterminant la position spatiale de ladite électrode (18, 18a, 18b, 18c) et le décalage de position relatif entre l'extrémité de l'électrode (18, 18a, 18b, 18c) en tant que cathode et l'extrémité de l'électrode en tant qu'anode à partir desdites images sélectionnées.

6. Procédé d'inspection de batterie selon la revendication 5, dans lequel ledit photorécepteur est un détecteur de rayons X de type conversion indirecte.

7. Procédé d'inspection de batterie selon la revendication 6, dans lequel ledit détecteur de rayons X de type conversion indirecte comprend un scintillateur de style cellulaire.
